# EUROPEAN PATENT SPECIFICATION

(11) **EP 2 485 204 B1**
(45) Date of publication and mention of the grant of the patent: **25.10.2017**
(21) Application number: 11193268.7
(22) Date of filing: 13.12.2011
(51) Int. Cl.: G08G 1/16, B60Q 1/52

(54) **Driving support apparatus for vehicle**
Antriebsunterstützungsvorrichtung für ein Fahrzeug
Appareil d'aide à la conduite pour véhicule

(30) Priority: 08.02.2011 JP 2011025494
(43) Date of publication of application: 08.08.2012
(73) Proprietor: Honda Motor Co., Ltd., Tokyo 107-8556 (JP)
(72) Inventor: Kamata, Yutaka, Saitama, 351-0193 (JP)
(74) Representative: Weickmann & Weickmann PartmbB

(56) References cited:
- EP-A2- 1 953 502
- JP-A- 2002 140 800
- JP-A- 2007 099 135
- JP-A- 2007 122 536
- US-A1- 2003 214 393

## Description

### Technical Field

This invention relates to a driving support apparatus for a vehicle which carries out transmission and reception of position information between moving bodies such as vehicles and provides driving support information regarding traveling based on the position information to the vehicles.

### Background Art

Conventionally, as disclosed in Japanese patent application No. JP-A-07-329640, a configuration has been proposed wherein an information display section for displaying road traffic information relating to traveling of a vehicle is provided in a mirror face portion of a door mirror for a vehicle for allowing a driver to recognize a situation behind the vehicle.

### Problem to be Solved by the Invention

In recent years, a vehicle-to-vehicle communication system wherein short-range wireless communication is utilized to exchange information by inter-vehicle communication to confirm the position, traveling direction and speed of a different vehicle (different car) with respect to a driver's own vehicle (own car) has been proposed.

In this vehicle-to-vehicle communication system, actuating information of an operation switch for a blinker or the like and information of a vehicle traveling state of a different vehicle such as position information, a speed, a yaw rate, a lateral acceleration and so forth are received by inter-vehicle communication from the different vehicle to display a traveling state and a relative position of a different vehicle existing around a driver's own vehicle, image information, and information of a road situation, a sign and so forth on an alarm and display section.

In a vehicle which includes such a vehicle-to-vehicle communication system as described above, since it is particularly significant to cause a driver of the vehicle to quickly recognize information of other vehicles therearound, it is desired to improve the visibility and the recognizability of the information.

However, a configuration wherein all obtained information is displayed on an information display section provided in a mirror like the configuration disclosed in Japanese patent application No. JP-A-07-329640 has a subject that, every time information is displayed, the driver must closely observe the information in order to recognize the displayed contents. Accordingly, not only time is required for the driver to grasp the displayed contents and a situation around its own vehicle but there is the possibility that a later appropriate process by the driver may be delayed.

JP 2007 099 135 A, on which the preamble of claim 1 is based, shows a scooter type motorcycle having a center display mounted on the inner part of the handlebar and divided by diagonal lines into four sections, each displaying different support information.

In JP 2007 122 536 A, the two door side back mirrors are provided with a respective display for giving a warning on obstacles. These displays are mounted on the outer portion of the door mirror.

EP 1 953 502 A2 refers to inter-vehicle communication, but does not disclose the specific position of any display means.

JP 2002 140800 A shows a scooter type motorcycle with displays mounted in the center portion of the vehicle in front of the driver.

The present invention has been made taking the foregoing circumstances into consideration, and it is an object of the present invention to provide a driving support apparatus for a vehicle for providing driving support information regarding traveling of an own vehicle with respect to other vehicles based on position information of the vehicles by inter-vehicle communication, which can achieve improvement in visibility and recognizability of driving support information.

### Means for Solving the Problem

In order to achieve the object described above, the invention provides a driving support apparatus for a saddle type vehicle according to claim 1.

According to claim 2, the driving support apparatus according to claim 1 is characterized in that the first display means (110) is provided in a displaced relationship to the front of the vehicle or to the rear of the vehicle with respect to the second display means (120).

According to claim 3, the driving support apparatus according to claim 1 or 2 is characterized in that the vehicle is a saddle type vehicle which includes a front cowl (100) which covers a front portion of the vehicle, a meter instrument (101) attached to the front cowl (100), and a handle bar (102) pivotably mounted with respect to the front cowl (100) for steering a front wheel, a left mirror and a right mirror being provided on the left and right of the handle bar (102) while the second display means (120) is provided on each of the left mirror and the right mirror, the first display means (110) being provided on the front cowl (100) or the meter instrument (101) between the left mirror and the right mirror.

According to claim 4, the driving support apparatus according to claim 3 is characterized in that the first display means (110) is disposed on a straight line which interconnects the second display means (120) provided on the left mirror and the right mirror as viewed in front elevation from a driver riding the vehicle.

According to claim 5, the driving support apparatus according to any of claims 1 to 4 is characterized in that each of the first display means (110) and the second display means (120) is a lighting member which can carry out lighting display.

According to claim 6, the driving support apparatus according to any one of claims 1 to 5 is characterized in that it further includes a driving support level decision section (14) which raises a degree of provision of driving support information relating to the risk stepwise as the own vehicle and the different vehicle come nearer to each other in the positional relationship therebetween, the degree of provision of driving support information decided by the driving support level decision section (14) including at least
(A) a stage at which it is guided that a different vehicle exists in the communication area, and
(B) another stage at which a direction in which a different vehicle having a near positional relationship to the own vehicle exists is guided,
   the first display means (110) and the second display means (120) carrying out fully lighting at the (A) stage, one of the display means which corresponds to a direction in which an object different vehicle exists being lit at the (B) stage.

According to claim 7, the driving support apparatus according to claim 6 is characterized in that it further includes direction designation operation means (130) for designating a direction, the display controlling means turning on, at the (A) stage, when the direction designation operation means (130) is operated and a different vehicle exists in the designated direction, that one of the display means which corresponds to the designated direction.

According to claim 8, the driving support apparatus according to claim 6 or 7 is characterized in that, when the direction designation operation means (130) is operated at the (B) stage, the operation is invalidated.

According to claim 9, the driving support apparatus according to any one of claims 6 to 8 is characterized in that the second display means (120) includes a point light emitting section (125) which can carry out point light emission, and a plane light emitting section (126) which can carry out plane light emission, and at the (A) stage, the point light emitting section (125) is turned on, but at the (B) stage, the point light emitting section (125) and the plane light emitting section (126) are turned on.

According to claim 10, the driving support apparatus according to any one of claims 1 to 9 is characterized in that a convex-shaped hood portion (306) is provided between the second display means (120) and a mirror face portion (302) of the back mirror apparatus (103).

### Effect of the Invention

According to claim 1, if it is found by vehicle-to-vehicle communication that a different vehicle exists at a position behind the own vehicle, then driving support information is displayed on the second display means provided on the back mirror apparatus. Therefore, a driver of the vehicle can readily recognized that the information displayed by the second display means is that of a situation behind the own vehicle. Besides, when the driver actually confirms a situation behind the own vehicle by means of the mirror after the driver recognizes the information, the driver can confirm the information through a small amount of movement of the line of sight, and action after the recognition of the information till the grasp of the actual situation can be carried out rapidly by a series of operations.

Further, information which does not relate to a situation behind the own vehicle, for example, information relating to a situation ahead of the own vehicle, can be confirmed by means of the first display means provided at a location different from that of the second display means provided on the back mirror. Consequently, it can be confirmed readily that the displayed information is that of a situation ahead of the own vehicle.

According to claim 2, since the first display means and the second display means can be separated clearly in the forward and backward direction of the vehicle, information of a situation ahead of the own vehicle and information of a situation behind the own vehicle can be distinguished readily. Particularly where the first display means is provided on the vehicle forwardly with respect to the second display means, when the driver actually confirms a situation ahead of the own vehicle after the driver recognizes the information, the driver can confirm the information through a small amount of movement of the line of sight, and action after the recognition of the information till the grasp of the actual situation can be carried out rapidly by a series of operations.

According to claim 3, since the second display means is provided on each of the left mirror and the right mirror of the handle bar, even after the handle bar is operated, one of the left and right second display means can be moved to a position nearer to the driver, and consequently, recognition of information is facilitated. Further, since the first display means is provided between the second display means provided on the left and right mirrors, also the movement of the line of sight between the first display means and the second display means can be reduced.

According to claim 4, the first display means can be disposed at the shortest distance between the second display means on the left and right mirrors, and the driver can confirm all display means through a small amount of movement of the line of sight.

According to claim 5, since information around the own vehicle can be recognized only from the lit state of the display means, action after the recognition of the information till the grasp of the actual situation can be carried out rapidly without watching the display means.

According to claim 6, the driver can grasp the urgency of different vehicle information only from the lit state of the display means. Further, as regards the different vehicle information at the (B) stage whose urgency is high, the driver can rapidly recognize a direction in which the different vehicle exists without watching the display means, and action after the recognition of the information till the grasp of the actual situation can be carried out rapidly.

According to claim 7, even at the (A) stage at which full lighting is carried out, the driver can obtain different vehicle information in a direction with regard to which the driver wants to know, and can recognize the different vehicle information in advance.

According to claim 8, at the (B) stage, information whose urgency is high can be kept let known preferentially to the driver, and changeover of the display information can be prevented.

According to claim 9, the driver can rapidly recognize a variation in lighting and can rapidly cope with a variation in urgency.

According to claim 10, display contents of the second display means can be prevented from being reflected to the mirror face portion. Accordingly, also where the second display means and the mirror face portion are disposed in the proximity of each other, since rearward confirmation can be carried out readily by means of the mirror face portion while preventing reflection to the mirror face portion, actual confirmation of a situation behind the self vehicle on the mirror can be carried out through a small amount of movement of the line of sight after information displayed on the second display means is recognized.

### Brief Description of the Drawings

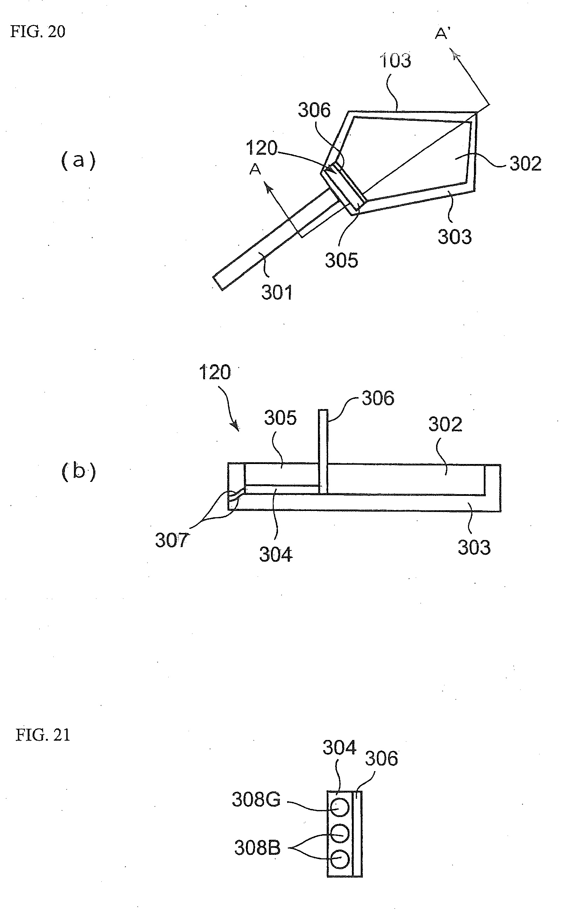

FIG. 1 is a block diagram showing an example of a driving support system in which a driving support apparatus for a vehicle of the present invention is used.
FIG. 2 is a view showing an example of an error map stored in an error occurrence region storage section.
FIG. 3 is a view illustrating an example of electronic map data.
FIG. 4 is a flow chart illustrating a decision procedure of an error area.
FIG. 5 is a view illustrating a relationship of vehicle position data and a straight line link and a fitting straight line.
FIG. 6 is a view illustrating area classification of vehicle position data depending upon the error magnitude.
FIG. 7 is schematic views for considering a longitudinal direction error of vehicle position data, and wherein (a) of FIG. 7 is a relationship diagram between vehicle position data and a straight line link in a lateral direction, (b) of FIG. 7 is a relationship diagram between vehicle position data and a straight line link in a longitudinal direction, and (c) of FIG. 7 is a vehicle speed graph.
FIG. 8 is a flow chart illustrating a decision procedure of an error area to be added where an error in a longitudinal direction is taken into consideration.
FIG. 9 is schematic views where a fitting straight line is corrected using a gyro sensor, and wherein (a) of FIG. 9 is a view illustrating relationships between vehicle position data and a straight line link and between a correction straight line link and a fitting straight line, and (b) of FIG. 9 is a graph illustrating a variation of a yaw angle θ1.
FIG. 10 is a flow chart illustrating a procedure for driving support level setting by the driving support system.
FIG. 11 is a flow chart illustrating a procedure for driving support level setting by another example of the driving support system.
FIG. 12 is a block diagram showing another example of a driving support system.
FIG. 13 is a flow chart illustrating a procedure for driving support level setting.
FIG. 14 is a schematic view showing part of a motorcycle in which the driving support apparatus for a vehicle of the present invention is incorporated.
(a) and (b) of FIG. 15 are schematic views illustrating an example of lighting of display sections of a first display apparatus and a second display apparatus in the driving support apparatus for a vehicle.
(a) and (b) of FIG. 16 are schematic views illustrating an example of lighting of the display sections of the first display apparatus and the second display apparatus in the driving support apparatus for a vehicle.

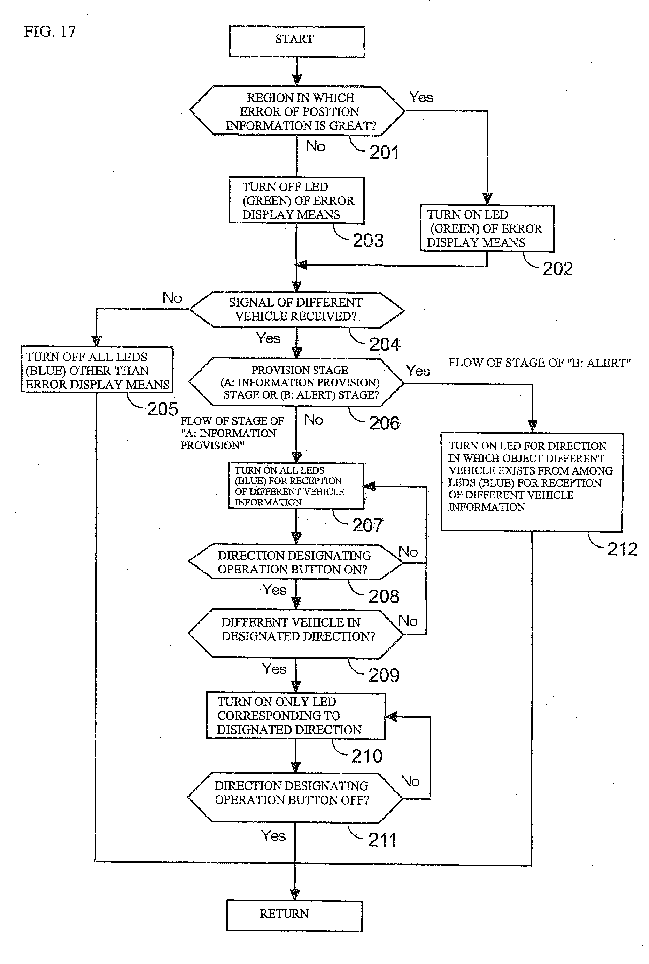

FIG. 17 is a flow chart illustrating a lighting processing procedure of the display sections of the first display apparatus and the second display apparatus in the driving support apparatus for a vehicle.

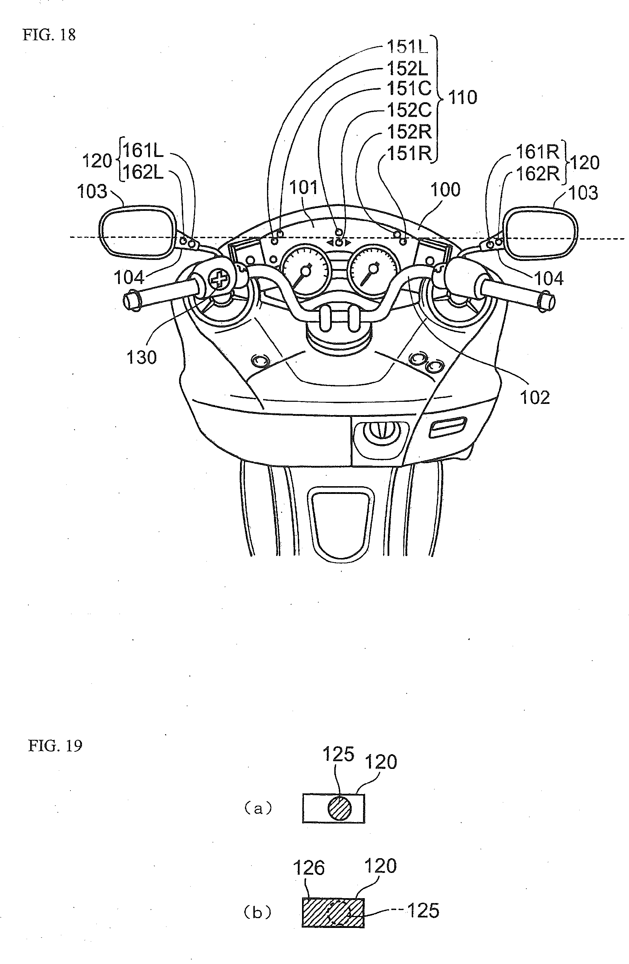

FIG. 18 is a schematic view showing part of a motorcycle in which a driving support apparatus for a vehicle of another example of the present invention is incorporated.
FIG. 19 shows an example of a light emitting section of the second display apparatus of the driving support apparatus for a vehicle, and wherein (a) of FIG. 19 is a schematic view illustrating a situation in which the light emitting section is in a point light emitting state and (b) of FIG. 19 is a schematic view illustrating another situation in which the light emitting section is in a plane light emit emitting state.
(a) and (b) of FIG. 20 show a back mirror apparatus on which the second display apparatus of the driving support apparatus for a vehicle of the present invention is provided integrally, and (a) of FIG. 20 is a schematic top plan view and (b) of FIG. 20 is a schematic sectional view taken along line A-A'.
FIG. 21 is a schematic top plan view of the second display apparatus shown in FIG. 20.

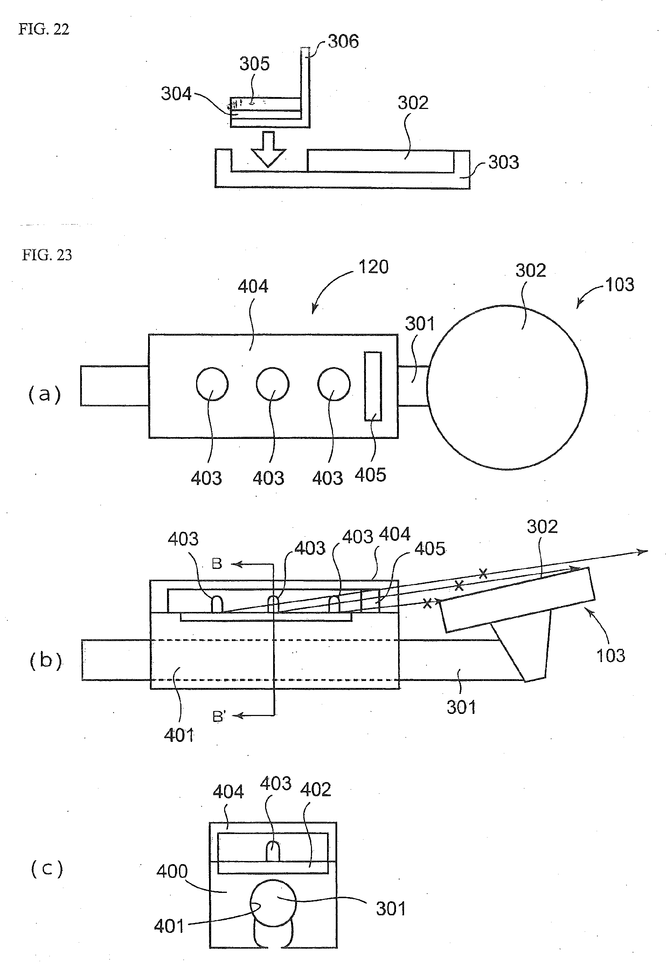

FIG. 22 is a schematic view of a structure where the second display apparatus is configured as a separate apparatus in the back mirror apparatus.
(a) to (c) of FIG. 23 show an example wherein the second display apparatus of the driving support apparatus for a vehicle of the present invention is mounted on a general-purpose back mirror apparatus, and (a) is a schematic top plan view, (b) is a schematic side elevational view, and (c) is a schematic sectional view taken along line B-B'.

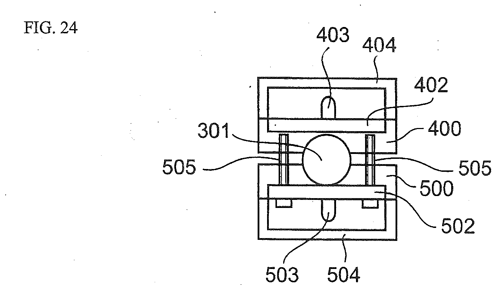

FIG. 24 is a schematic view of a sectional structure showing another example of the second display apparatus mounted on the general-purpose back mirror.

### Mode for Carrying Out the Invention

First, an example of a driving support system in which a driving support apparatus for a vehicle of the present invention is practically used is described with reference to the drawings. The driving support system of the present invention provides driving support information upon traveling of an own vehicle by exchanging, when a different vehicle exists within a communication area of the own vehicle or when the separation distance between the own vehicle and the different vehicle (including a four-wheeled car) is smaller than a predetermined distance, information by inter-vehicle communication (vehicle-to-vehicle communication) using short range wireless communication to confirm the position, traveling direction and speed of the different vehicle (different car) with respect to the own vehicle (own car).

In the following, the driving support system where the own vehicle is a motorcycle is described.

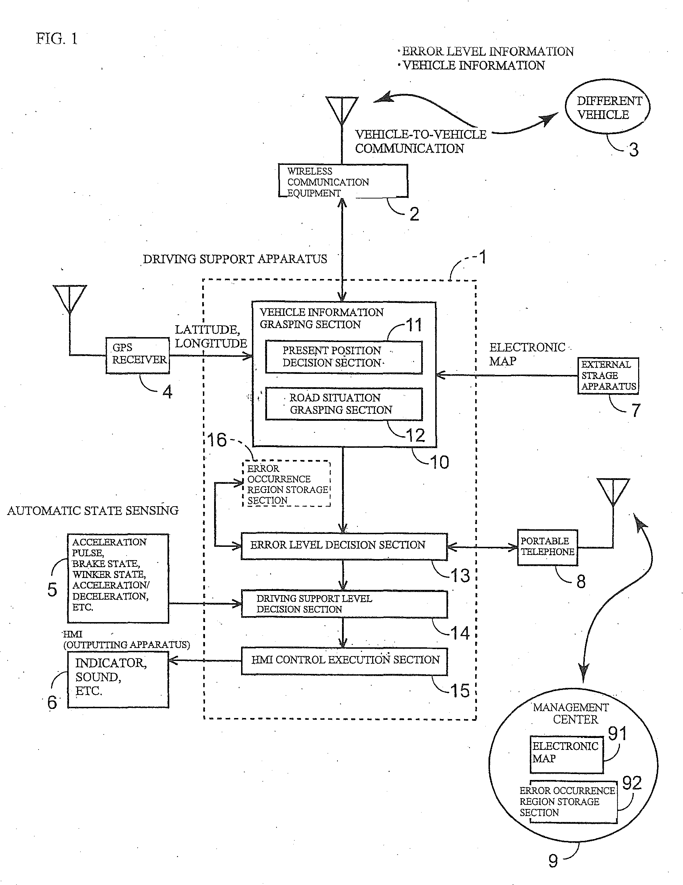

For example, as shown in FIG. 1, the driving support system includes a driving support apparatus 1, a wireless communication equipment 2, a GPS receiver 4 and various sensors 5, an outputting apparatus 6 for outputting driving support information, an external storage apparatus 7 in which an electronic map is stored, and a portable telephone set 8 for communication with a management center 9 which manages information relating to driving support, all provided on the own vehicle. The driving support system is configured such that it acquires different vehicle information from a different vehicle 3, latitude-longitude information of the own vehicle from the GPS receiver 4 and traveling information of the own vehicle from the various sensors 5 and driving support information is provided from the acquired information to the outputting apparatus 6.

The wireless communication equipment 2 acquires different vehicle information from a different vehicle 3 which travels within a communication range which is a fixed range around the own vehicle by vehicle-to-vehicle communication, and the vehicle-to-vehicle communication is carried out, for example, at a communication speed of 10 Hz (transmission is carried out 10 times for one second). The communication speed in the vehicle-to-vehicle communication may be varied in response to the vehicle speed. As the different vehicle information, for example, information of a type, a position, a speed and a direction of the vehicle (a motorcycle, an ordinary automobile, a large automobile or the like) is obtained.

Further, the wireless communication equipment 2 receives passage of an optical beacon, an ETC installation place or the like by road-to-vehicle communication to acquire congestion information.

The GPS receiver 4 receives latitude and longitude information of the own vehicle.

The sensors 5 include various sensors such as a vehicle speed sensor for detecting the vehicle speed and a gyro sensor and detects a vehicle speed, an acceleration, a direction, an inclination (in the case of a motorcycle), a braking state, a blinker state and so forth of the own vehicle.

The outputting apparatus 6 is configured from a speaker carried on the own car (vehicle) for outputting sound, an indicator installed in a meter mounted forwardly with respect to a handle bar or at a lower portion on the inner side of a front screen, a vibrator mounted in the proximity of a seat and so forth. The outputting apparatus 6 is configured so that the driver (rider) can recognize different vehicle information provided from the driving support apparatus 1 by a sense of sight, a sense of hearing and so forth.

The external storage apparatus 7 has electronic map information stored therein in advance.

The management center 9 centrally manages all vehicle information during traveling, and includes an error occurrence region storage section 92 for storing, as information relating to driving support, areas in which an error is likely to occur in regard to position information on the map. The error occurrence region storage section 92 stores regions in which the error of position information has a level not lower than a predetermined level together with the map information in advance.

The management center 9 may include electronic map information 91. In this instance, the management center 9 collects, updates and distributes error information from the own vehicle and different vehicles to manage the error information in a concentrated manner. The error information managed by the management center 9 is provided to the driving support apparatus 1 side by communication with the portable telephone set 8.

The driving support apparatus 1 includes vehicle information grasping section 10 to which information from the wireless communication equipment 2, GPS receiver 4 and sensors 5 is inputted so that the vehicle information grasping section 10 grasps vehicle information of the own vehicle. The vehicle information grasping section 10 includes a present position decision section 11 and a road situation grasping section 12, and acquires node and link information from a map database of the external storage apparatus 7. The present position decision section 11 can grasp the position of the own vehicle at present with respect to a crossing which exists ahead of the own vehicle during traveling by deciding the current position of the own vehicle on the electronic map acquired from the external storage apparatus 7 based on the information acquired by the GPS receiver 4.

The road situation grasping section 12 grasps a road situation such as congestion information by road-to-vehicle communication by means of the wireless communication equipment 2.

Further, the driving support apparatus 1 includes an error level decision section 13 for deciding an error level of acquired information from a locus of the own vehicle by the present position decision section 11, a driving support level decision section 14 for changing the degree of provision of driving support information stepwise in response to a traveling region of the own vehicle, an HMI control execution section 15 for controlling provision of driving support information to the outputting apparatus 6, and an error occurrence region storage section 16 for storing regions in which the error of position information has a level higher than a predetermined level in conformity with the map information in advance.

Details of a decision procedure of the error level by the error level decision section 13 are hereinafter described.

Information of the driving support level by the driving support level decision section 14 is provided to the outputting apparatus 6 through the HMI control execution section 15 in response to the distance between the own vehicle and a different vehicle or the speed and is configured from three stages of, for example, "information provision," "alert" and "warning". When the distance between the own vehicle and a different vehicle is great, the "information provision" is issued; when they approach each other from the condition described (for example, at a limit position at which the own vehicle can be stopped if a braking operation is carried out in a certain period of reaction time), the "alert" is issued; but when there is no sufficient time before they meet each other (at a position at which the own vehicle cannot be stopped if an instruction to carry out a braking operation is not issued), the "warning" is issued.

The "information provision" corresponds to (A) a stage at which it is guided that a different vehicle exists within the communication area, and only information is presented (guide of such a degree that "a different vehicle exists in the communication area") without any decision by the driving support apparatus 1. In particular, indicator turning on or the like is carried out by the outputting apparatus 6.

The "alert" corresponds to (B) a stage at which a direction in which a different vehicle whose positional relationship to the own vehicle is near exists is guided, and the driving support apparatus 1 does not issue an instruction for a behavior although it carries out a decision. In particular, lighting by which the driver can recognize in which direction a different vehicle exists is carried out by an indicator of the outputting apparatus 6. If the vehicle has a navigation system, then a direction in which a different vehicle advances is displayed on the screen.

The "warning" corresponds to (C) a state at which an instruction for a behavior of the own vehicle is issued, and the driving support apparatus 1 makes a decision and issues an instruction for a behavior (slowdown or the like) in voice or the like through the outputting apparatus 6. It is to be noted that the information provision may be carried out at two stages of (A) and (B) omitting (C).

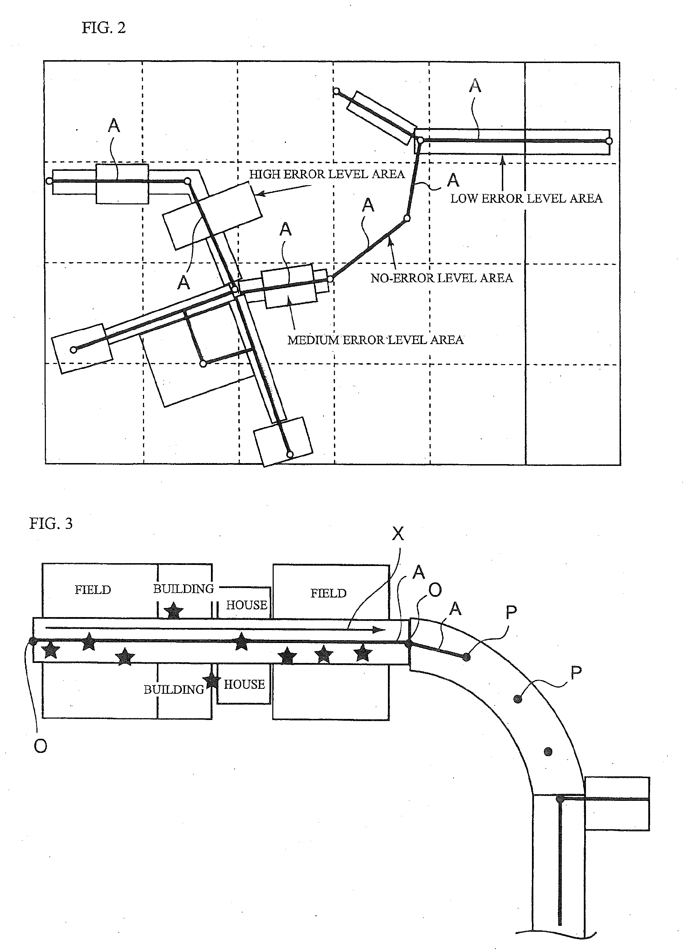

As shown in FIG. 2, the error occurrence region storage section 92 has stored therein an error map (error area map) wherein a plurality of areas (meshes) each of which is a region of a several kilometer square are coupled. For the map information of the areas, a high error level area, a medium error level area, a low error level area and a no-error area having different lengths from each other in a road widthwise direction are set to a straight line link A of each road. For each error area, a location set in advance is stored, and if a new error area is confirmed by the error level decision section 13, then the pertaining location is stored and updated.

In the example described above, the error occurrence region storage section 92 is installed on the management center 9 side, and error information is provided to the error level decision section 13 by communication with the portable telephone set 8 installed on the own vehicle side and new error information is transmitted to the management center 9 side to carry out updating of error information in the error occurrence region storage section 92.

Or, the error occurrence region storage section 16 may be provided in the driving support apparatus 1 in place of the error occurrence region storage section 92 on the management center 9 side. In this instance, if an error region is confirmed newly by the error level decision section 13, then information is updated only in the error occurrence region storage section 16 in the driving support apparatus 1 of the own vehicle.

In the driving support system of the present invention, if the own vehicle exists in a region in which the error of position information provided from the error occurrence region storage section 92 or the error occurrence region storage section 16 to the error level decision section 13 has a level not lower than a predetermined level, then driving support information whose provision degree to the own vehicle has a level not lower than a predetermined level is limited.

In particular, if the driving support apparatus 1 decides that the own vehicle exists in a region in which the error of position information has a level not lower than a predetermined level (for example, the medium error level), then it inhibits provision of driving support information at least of the stage (C) corresponding to the "warning" for the instruction of a behavior of the own vehicle described above to the outputting apparatus 6. Where only the two cases of (A) and (B) are applied, (B) is inhibited.

Now, a decision procedure of the error level by the error level decision section 13 is described with reference to FIGS. 3 to 6.

The electronic map acquired from the map database of the external storage apparatus 7 includes nodes (end points) existing at the opposite ends of a straight road, and auxiliary nodes (shape interpolation points) existing at intervals at a central position of a curved road. Data of a vehicle position acquired when a vehicle actually passes suffers from an error due to a difference in the reception situation by such a situation that a tall building exists around the road and is sometimes displaced from a straight line link A which is a line which interconnects nodes.

For example, in FIG. 3, where the traveling locus of a vehicle is X on the electronic map, data of the vehicle positions acquired when the vehicle passes are positions plotted by star marks, and when the own vehicle is positioned in the shadow of a building, a house or the like and is hard to communicate with GPS satellites, an error is likely to occur, but at a location where the outlook is good upwardly like a field, the error is little.

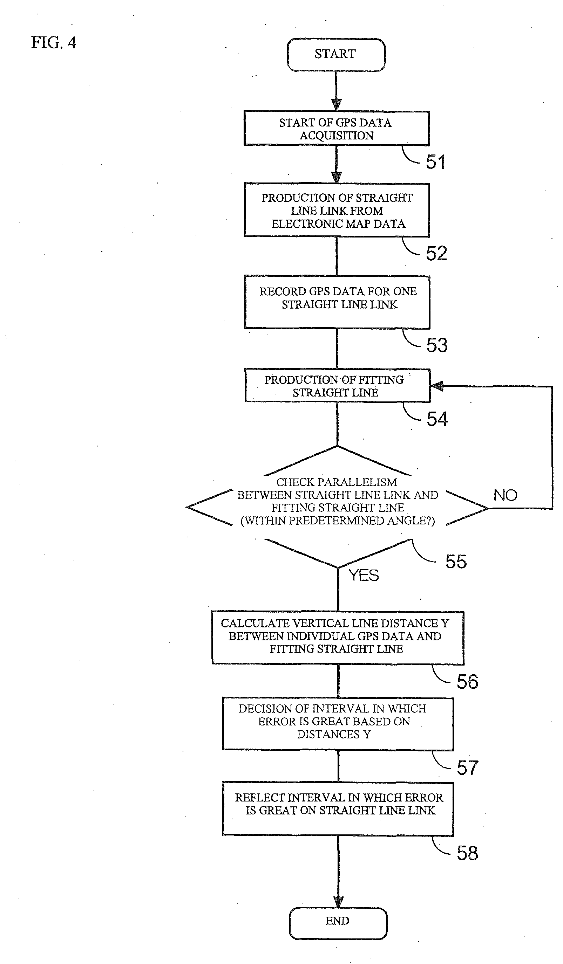

In the decision of the error level by the error level decision section 13, as illustrated in the flow chart of FIG. 4, the vehicle information grasping section 10 first carries out acquisition of GPS coordinates and orientation information by means of the GPS receiver 4 (step 51). The acquisition of the GPS coordinates and the orientation information is carried out after every system time (for example, 0.5 seconds), and the position of a neighboring node on the map is detected from the acquired data and a straight line link A is produced (step 52). In particular, as shown in FIG. 3, a node O and a auxiliary node P or auxiliary nodes P in a region in which vehicle position data (star marks) are plotted are detected and adjacent nodes (also auxiliary nodes are regarded as nodes) are connected by a straight line to produce a straight line link A.

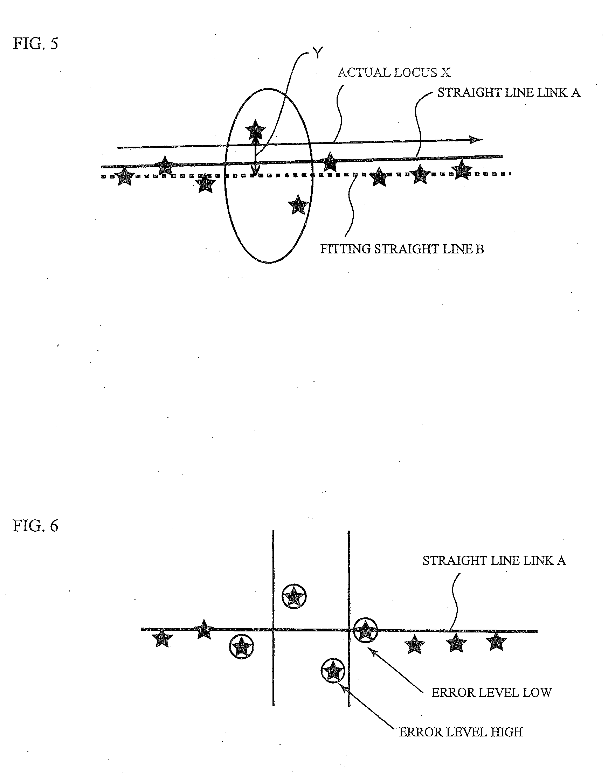

Then, the GPS data for one straight line link are recorded as vehicle position data (data corresponding to a plurality of star marks in FIG. 5) (step 53).

A fitting straight line (approximate straight line) B is produced from a plurality of vehicle position data (star marks) (step 54). The fitting straight line B is produced by calculating a straight line by least-square approximation from the data string of the vehicle position data (star marks).

Then, the parallelism between the straight line link A and the fitting straight line B is checked to decide whether or not it is within a predetermined angle (step 55).

If the parallelism is not within the predetermined angle, then a fitting straight line is produced again (step 54).

In particular, a straight line is calculated by least-square approximation from the data string of vehicle position data (star marks) and the inclination of the straight line and the inclination of the link are compared with each other, and then, if the difference between them exceeds a permissible amount, then another data string is selected to re-produce a fitting straight line B. In this instance, one oldest vehicle position data (GPS data) is deleted to carry out re-production of a fitting straight line B.

If the parallelism of the fitting straight line B is within the predetermined angle (step 55), then a vertical line distance Y between each GPS data and the fitting straight line B is calculated (step 56).

A decision of an interval in which the error is great is carried out based on the distances Y (step 57). The decision of an interval in which the error is great is carried out such that, if the error level is higher than a certain value (for example, an average value within the interval), the interval in which the data is involved is decided as an interval within which the error is great. Further, this decision is classified into one of "high error level," "medium error level," "low error level" and "no error" depending upon the value of the distance Y.

An interval in which an error occurs ("high error level," "medium error level," "low error level") is reflected on the straight line link A to carry out information updating of the error map (FIG. 2) of the error occurrence region storage section 92 (error occurrence region storage section 16) (step 58).

The direction along the straight line link A of an error area is delimited at a midpoint where the level differs. For example, if vehicle position data (round star marks) among which the error occurrence level is different exist successively on the straight line link A as shown in FIG. 6, then a midpoint (indicated by a vertical line in FIG. 6) between vehicle position data with which the error level is high and vehicle position data with which the error level is low is determined as the boundary between the error areas.

Meanwhile, the width of each error area is set equal to the error amount (distance Y) or the error amount + one side width of the road.

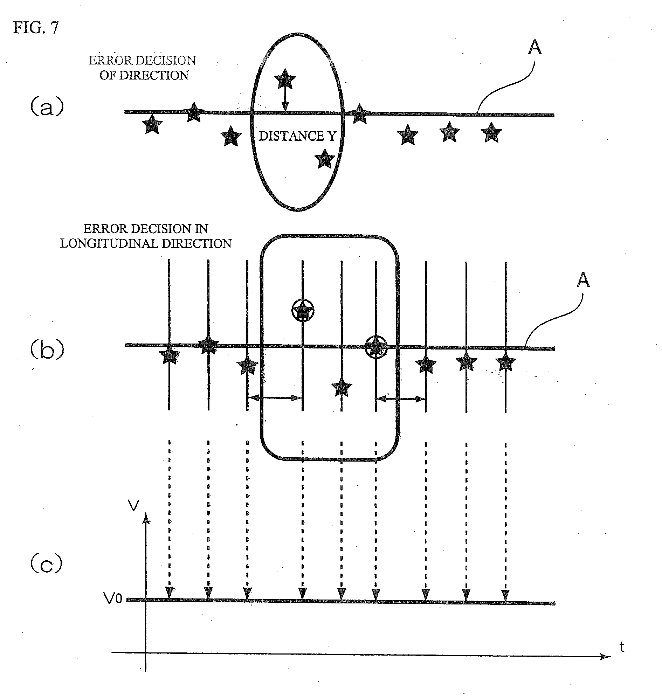

While, in the decision procedure of an error level by the error level decision section 13 in the example described above, only the error in the lateral direction is decided to carry out processing as illustrated in FIG. 5, the decision may be carried out, as illustrated in FIG. 7, taking also errors in the longitudinal direction ((b) of FIG. 7) into consideration in addition to errors in the lateral direction ((a) of FIG. 7).

In vehicle position data (GPS data) for one straight line link, if an interval within which the speed is V0 and fixed to some degree is involved, then plot positions of the vehicle position data in (b) of FIG. 7 are considered to be positioned at equal intervals in the advancing direction of the straight line link A. If the plot positions are not positioned at equal intervals, then it is considered that an error occurs in the longitudinal direction. In FIG. 7, the data at two positions indicated by round star marks do not exhibit an equal interval in the advancing direction although the speed is substantially fixed, and therefore, it is decided that an error in the longitudinal direction occurs with the two data. A portion surrounded by a quadrangle in (b) of FIG. 7 indicates an area in which the error in the longitudinal direction seems great.

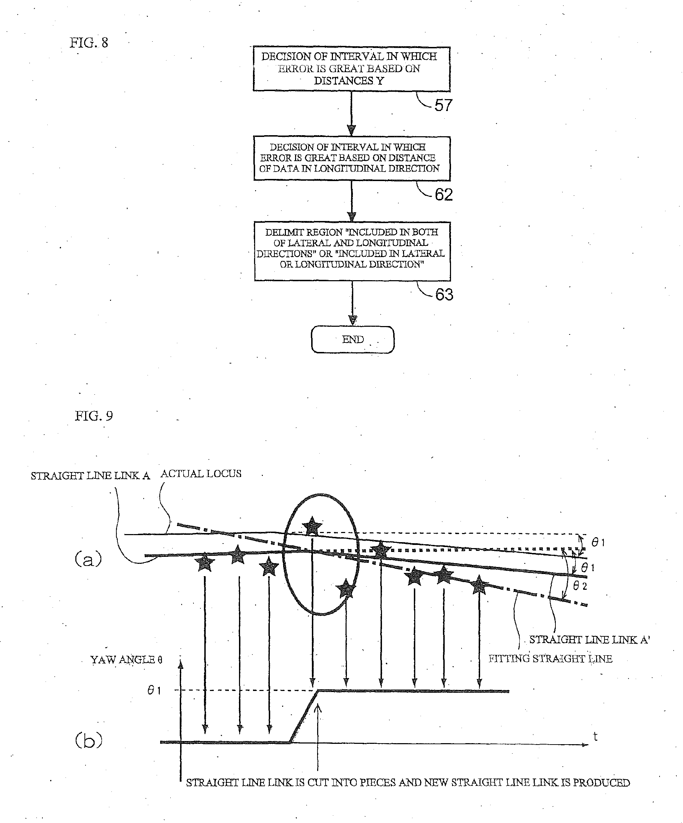

In particular, subsequently to the "decision of an interval in which the error is great based on the distance Y" step 57 of the flow chart of FIG. 4, a decision of an interval in which the error is great is carried out based on the distances of the data in the longitudinal direction (step 61), and a region which "is included in both in the lateral and longitudinal directions" or "is included in the lateral direction or the longitudinal direction" is delimited as an interval (step 62) as shown in FIG. 8.

Further, in order to achieve improvement in accuracy in the error occurrence area setting, when a fitting straight line is produced (step S54) in the flow chart of FIG. 4, data acquired from the gyro sensor may be used. Different from a four-wheeled car, in the case of a motorcycle, it sometimes travels using road width fully (for example, in an oblique direction), and there is the possibility that the locus of the vehicle and the inclination of a straight line link set to the road may different from each other. In such an instance, a variation of the orientation, that is, an inclination of the traveling locus, is calculated from the gyro sensor mounted on the vehicle to correct the straight line link, and comparison between the corrected straight line link and the fitting straight line is carried out.

In particular, if an actual locus of the vehicle (motorcycle) varies within a straight line link as shown in FIG. 9, then the yaw angle θ (orientation angle) is calculated by integrating the value (yaw angular speed) of the yaw rate gyro sensor ((b) of FIG. 9), and a straight line link A' is produced by adding the angular variation amount θ1 to the straight line link A ((a) of FIG. 9). Then, at step 55 of the flow chart of FIG. 4, the parallelism between the straight line link A' and the fitting straight line is compared. In particular, the angle of the fitting straight line with respect to the straight line link A is represented by θ2, and if the absolute value of (θ1 - θ2) is lower than a preset value α, then it is decided that fitting is achieved.

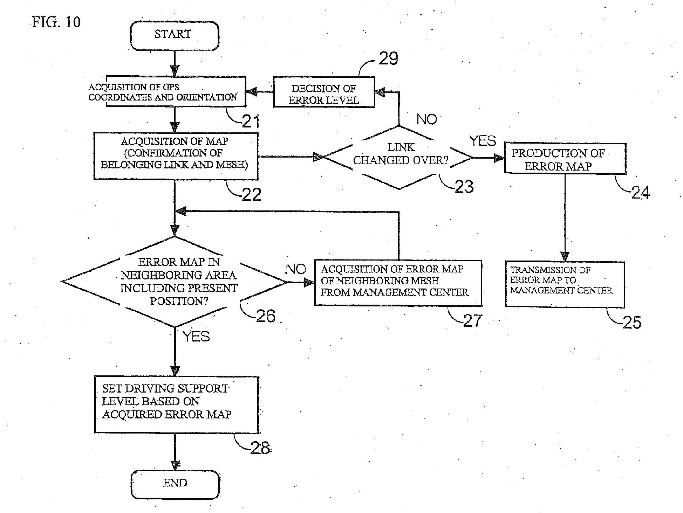

Now, a processing procedure of driving support level setting by the driving support level decision section 14 of the driving support apparatus 1 wherein electronic map data are provided in the management center 9 and the external storage apparatus 7 is described with reference to a flow chart of FIG. 10.

The vehicle information grasping section 10 carries out acquisition of GPS coordinates and orientation information by means of the GPS receiver 4 (step 21). The acquisition of GPS coordinates and orientation information is carried out after every system time (for example, 0.5 seconds).

A mesh corresponding to the GPS coordinates acquired from the electronic map data of the external storage apparatus 7 is acquired and an adjacent node or link is selected (step S22).

It is decided whether or not the straight line link has changed over (step 23), and an error level decision of the link at present is carried out until the link changes over to a next link (step 29). If the link has changed over to a next link, then the production of an error map corresponding to the immediately preceding link is completed (step 24), and the error map or error level information is transmitted to the management center 9 (step 25).

Meanwhile, it is decided whether or not an error map exists in a neighboring area including the present position (step 26), and if no such error map exists, then an error map of a neighboring mesh is acquired from the management center 9 (step 27).

Setting of a driving support level is carried out based on the acquired error map (step 28). In particular, if the position of the own vehicle on the error map (FIG. 2) is in a region of the high error level or the medium error level, then provision of driving support information of the stage (C) at which at least an instruction for a behavior of the own vehicle described above is issued is inhibited.

In the case of the present embodiment, each of the own vehicle and a different vehicle can share an error map produced thereby, and also the accuracy of the error map is improved.

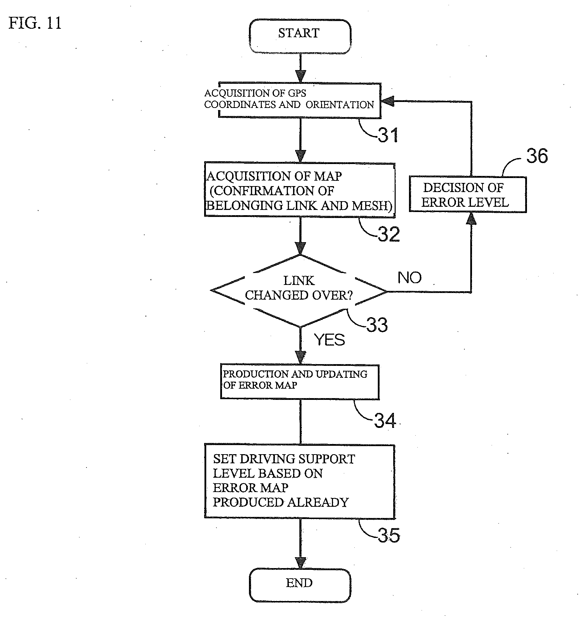

Now, a processing procedure of driving support level setting by the driving support apparatus 1 where the management center 9 does not exist although electronic map data are provided in the external storage apparatus 7 is described with reference to a flow chart of FIG. 11.

The vehicle information grasping section 10 carries out acquisition of GPS coordinates and orientation information by means of the GPS receiver 4 (step 31). The acquisition of GPS coordinates and orientation information is carried out after every system time (for example, 0.5 seconds).

A mesh corresponding to the GPS coordinates acquired from the electronic map data of the external storage apparatus 7 is acquired and an adjacent node or link is selected (step 22).

It is decided whether or not the straight line link has changed (step 33), and an error level decision of the link at present is carried out until the link changes over to a next link (step 36). If the link has changed over to a next link, then the production of an error map corresponding to the immediately preceding link is completed and the error map is updated (step 34).

On the other hand, setting of a driving support level is carried out based on the error map produced already (step 35).

In the case of the present embodiment, setting of a driving support level is carried out using the error map produced only by the own vehicle.

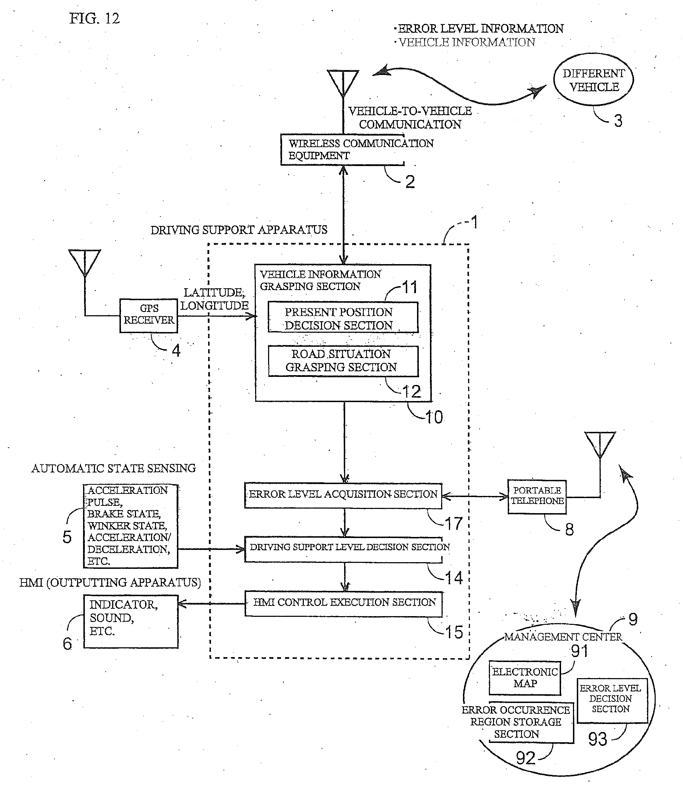

FIG. 12 shows another example of the driving support system, and elements having the same configuration as that of FIG. 1 are denoted by like reference characters.

This example is of a type which does not include the external storage apparatus 7 in the vehicle, and in this instance, information relating to a map is acquired from the electronic map information 91 managed by the management center 9.

Also the error occurrence region storage section 92 and an error level decision section 93 are provided on the management center 9 side, and on the driving support apparatus 1 side, an error level acquisition section 17 is provided in place of the error level decision section 13 of FIG. 1. The error level acquisition section 17 acquires information of the error level of the position of the own vehicle on the map from the electronic map information 91 and the error level decision section 93 by communication through the portable telephone set 8.

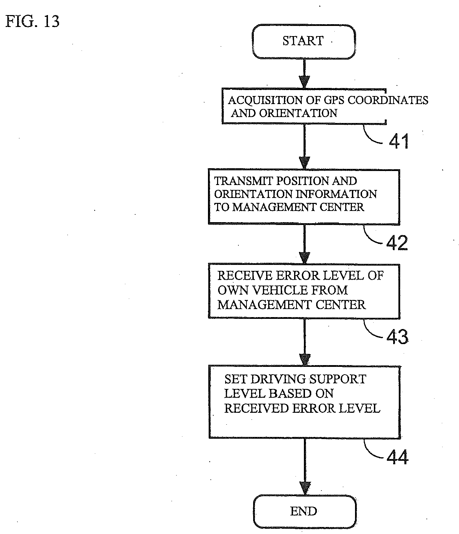

A processing procedure of driving support level setting by the driving support apparatus 1 of FIG. 12 is described with reference to a flow chart of FIG. 13.

The vehicle information grasping section 10 carries out acquisition of GPS coordinates and orientation information by means of the GPS receiver 4 (step 41). The acquisition of GPS coordinates and orientation information is carried out after every system time (for example, 0.5 seconds).

The position and orientation information of the own vehicle is transmitted to the management center 9 after every system time (for example, 0.5 seconds) (step 42).

An error level regarding the position of the own vehicle is received from the management center 9 (step 43).

Setting of a driving support level is carried out based on the received error level (step 44).

In the case of the present embodiment, concentrated management of error information is carried out by the management center 9 side.

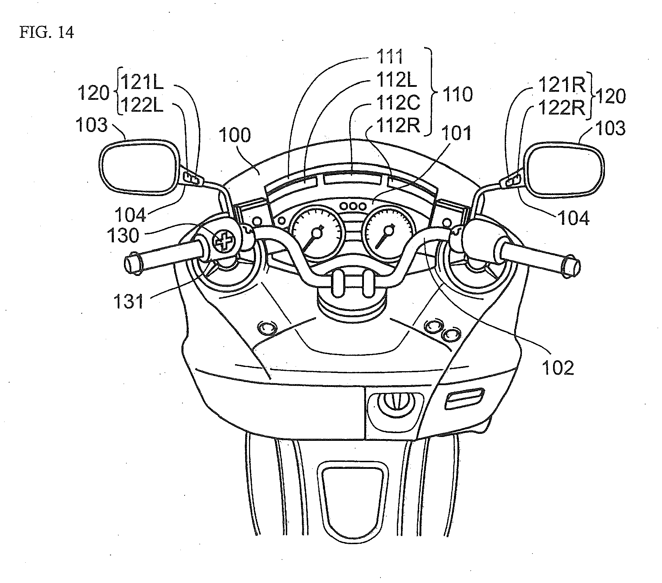

Now, a particular example of the outputting apparatus 6 which is a characteristic component of the driving support apparatus for a vehicle of the present invention is described with reference to FIG. 14.

The outputting apparatus 6 is incorporated in a motorcycle (saddle type vehicle) which includes a front cowl 100 for covering the front portion of the vehicle, a meter instrument 101 attached to the front cowl 100, and a handle bar 102 rotatable with respect to the front cowl 100 for steering a front wheel.

The outputting apparatus 6 is configured from a first display apparatus 110 provided on the inner side of the front cowl 100 of the motorcycle, and a second display apparatus 120 provided at a mirror base portion 104 of each of back mirror apparatus 103 provided on the left and the right of the handle bar 102 for reflecting a situation behind the vehicle. The first display apparatus 110 is provided on the front cowl 100 or the meter instrument 101 between the left and right back mirror apparatus 103 and displays driving support information when a different vehicle exists at a position ahead of the own vehicle. The second display apparatus 120 are provided at the mirror base portions 104 of the back mirror apparatus 103 such that they are positioned rearwardly with respect to the first display apparatus 110 and displays driving support information when a different vehicle exists at a position behind the own vehicle.

The first display apparatus 110 is configured as an indicator of the plane light emitting type from an upper side display section 111 elongated in the leftward and rightward direction, and three-piece lower side display sections 112L, 112C and 112R positioned below the upper side display section 111. The upper side display section 111 and the lower side display sections 112 are configured from a plurality of LEDs arranged in an array such that they can display different colors. The upper side display section 111 is lit in green when the driving support apparatus 1 described above decides that "the own vehicle is positioned in an area in which the error is great". The three-piece lower side display sections 112 display different vehicle information provided through vehicle-to-vehicle communication of the driving support apparatus 1, and in the case of the state of the information provision (A) stage at which "a different vehicle exists in the communication area", all of the three-piece lower side display sections 112L, 112C and 112R are lit in blue. At the alert (B) stage at which "a different vehicle having a near positional relationship to the own vehicle exists," that one of the three-piece lower side display sections 112L, 112C and 112R which corresponds to a direction in which a different vehicle exists (112L: left forwardly, 112C: front forwardly, or 112R: right forwardly) is lit in blue.

The second display apparatus 120 provided at the mirror base portion 104 of each back mirror apparatus 103 is configured from an inner side display section 121L (121R) of the plane light emitting type positioned on the inner side and an outer side display section 122L (122R) of the plane light emitting type positioned on the outer side. The inner side display sections 121 are lit in green when "the own vehicle is positioned in an area in which the error is great," but in the case of the information provision (A) stage at which "a different vehicle exists in the communication area," the left and right outer side display sections 122L and 122R are lit in blue whereas, at the alert (B) stage at which "a different vehicle having a near positional relationship to the own vehicle exists," only that one of the left and right outer side display sections 122 which corresponds to a direction (122L: left rear, or 122R: right rear) in which a different vehicle exists is lit in blue.

The color of the lighting body of the first display apparatus 110 and the second display apparatus 120 is determined such that the lighting body is lit in a color other than red and orange (in the case of the present example, in green or blue) so that it may not be misunderstood as lighting of a stop lamp or a direction indicator when it is viewed from another vehicle. Also flickering of the lighting body is not carried out.

Further, a direction designation operation section 130 configured from a cross button is provided on a case section 131 positioned on the inner side of the grip at the left position of the handle bar 102 to make it possible for the driver to confirm, when all of the lower side display sections 112 (112L: left forward, 112C: front forward, 112R: right forward) of the first display apparatus 110 are lit, "whether a vehicle exists in a designated direction" on the front, rear, left or right in response to a depressed portion of the cross button. In response to the depression, one of the three-piece lower side display sections 112L, 112C and 112R (first display apparatus 110) and the outer side display sections 122L and 122R (second display apparatus 120) is lit while the others are unlit.

By providing the direction designation operation section 130, even at the information provision (A) stage at which the lower side display sections 112 (112L: left forward, 112C: front forward, 112R: right forward) of the first display apparatus 110 are fully lit, the driver can acquire different vehicle information in a direction with regard to which the driver wants to know. Thus, the driver can recognize the alert (B) stage at which "a different vehicle having a near positional relationship to the own vehicle exists" by the driving support apparatus 1 in advance at a stage preceding to display of the alert (B) stage.

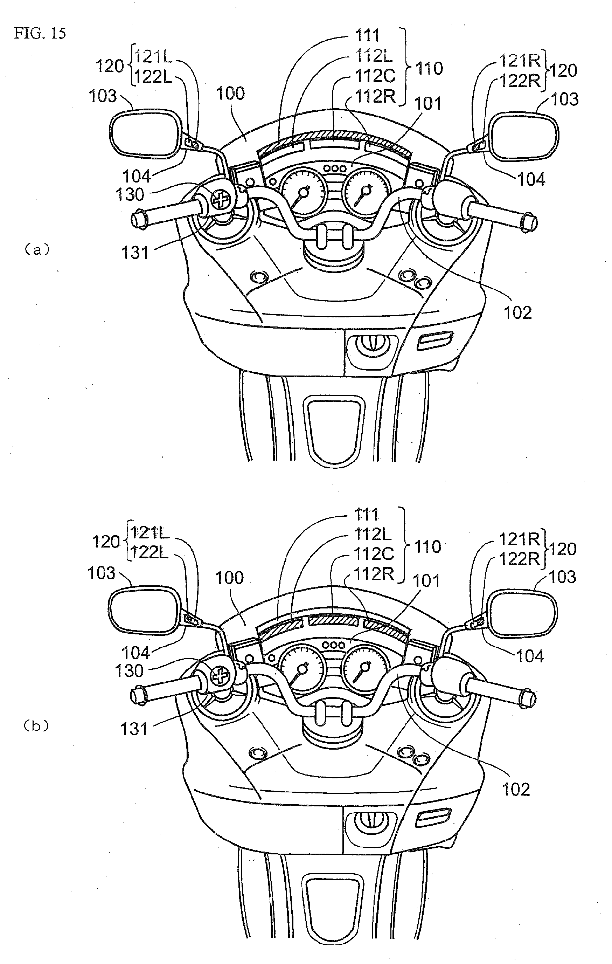

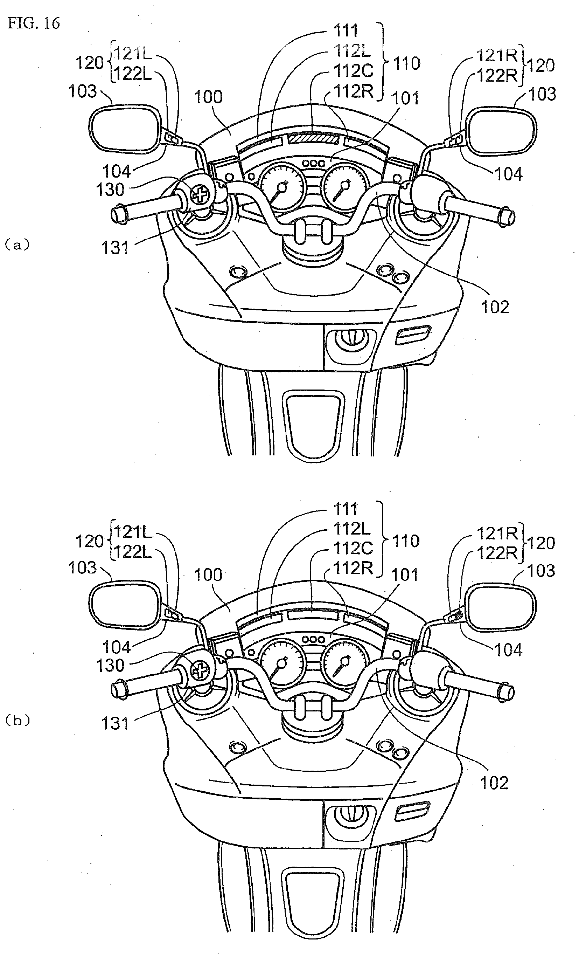

Now, particular lighting situations of the first display apparatus 110 and the second display apparatus 120 are described with reference to FIGS. 15 and 16.

For example, when the upper side display section 111 of the first display apparatus 110 and the inner side display sections 121L and 121R of the second display apparatus 120 are lit (indicated by slating lines) in green as shown in (a) of FIG. 15, it is indicated that the own vehicle is positioned within an area within which the error is great.

When all of the lower side display sections 112 (all of the three-piece lower side display sections 112L: left forward, 112C: front forward, 112R: right forward) of the first display apparatus 110 and the left and right outer side display sections 122L and 122R are lit (indicated by slanting lines) in blue as shown in (b) of FIG. 15, this signifies the information provision (A) stage at which "a different vehicle exists in the communication area."

Then, at the alert (B) stage at stage "a different vehicle having a near positional relationship to the own vehicle exists," that one of the three-piece lower side display sections 112L, 112C and 112R of the first display apparatus 110 corresponding to a direction in which a different vehicle exists (112L: left forward, 112C: front forward, 112R: right forward) or one of the outer side display sections 122L and 122R of the second display apparatus 120 is lit while the others are unlit.

For example, when the presence of a different vehicle in the front forward direction is to be alerted, only the centrally located lower display section 112C of the first display apparatus 110 is lit ((a) of FIG. 16) in blue, but when the presence of a different vehicle in the rear rightward direction is to be alerted, only the outer side display section 122R of the second display apparatus 120 on the right side one of the back mirror apparatus 103 is lit in blue ((b) of FIG. 16).

According to the configuration described above, if it is found by vehicle-to-vehicle communication that a different vehicle exists at a position behind the own vehicle, driving support information is displayed on the second display apparatus 120 provided on the back mirror apparatus 103. Therefore, the driver of the vehicle can easily recognize that the information displayed on the second display apparatus 120 is that of a vehicle positioned behind the own vehicle. Further, actual confirmation of a situation behind the own vehicle by the back mirror apparatus 103 after the information is recognized can be carried out with a small amount of movement of the line of sight, and action after the recognition of the information till the grasp of the actual situation can be carried out rapidly by a series of operations.

Further, information which does not relate to a situation behind the own vehicle, for example, information relating to a situation ahead of the own vehicle, can be confirmed by means of the first display apparatus 110 provided at a location different from those of the second display apparatus 120 provided on the back mirror apparatus 103. Consequently, it can be confirmed readily that the displayed information is that ahead of the own vehicle.

Since the first display apparatus 110 is formed on the vehicle ahead of the second display apparatus 120, confirmation of an actual situation in the forward direction after recognition of the information can be carried out by a small amount of movement of the line of sight, and action after the recognition of the information till the grasp of the actual situation can be carried out rapidly by a series of operations.

Further, since the first display means and the second display means can be separated clearly between the forward and backward directions of the vehicle, information ahead of the own vehicle and information behind the own vehicle can be distinguished from each other readily.

It is to be noted that the first display apparatus 110 may be formed on the vehicle behind the second display apparatus 120.

Further, since the second display apparatus 120 are provided at the mirror base portions 104 of the left and right back mirror apparatus 103 of the handle bar 102, even after the handle bar is operated, one of the left and right second display apparatus 120 can be moved to a position nearer to the driver, which facilitates recognition of information. Furthermore, since the first display apparatus 110 is provided between the second display apparatus 120 provided on the left and right mirrors, also the movement of the line of sight between the first display apparatus 110 and the second display apparatus 120 can be reduced.

Further, since, at the information provision (A) stage at which "a different vehicle exists in the communication area," all of the lower side display sections 112L, 112C and 112R of the first display apparatus 110 are lit but, at the alert (B) stage at which "a different vehicle having a near positional relationship to the own vehicle exists," one of the lower side display sections 112L, 112C and 112R and the outer side display sections 122L and 122R of one of the second display apparatus 120 which corresponds to the direction in which a different vehicle exists is lit, the urgency of different vehicle information can be grasped readily only from a lit state of the display apparatus. Further, for the different vehicle information at the (B) stage at which the urgency is high, the driver can recognize the direction in which a different vehicle exists rapidly without watching the display means, and operation after the recognition of the information till the grasp of the actual situation can be carried out rapidly.

Now, a lighting processing procedure of the display sections of the first display apparatus and the second display apparatus is described with reference to a flow chart of FIG. 17.

It is decided whether or not the position information of the own vehicle represents a region in which the error is great (step 201).

If the own vehicle is in a region in which the error is great, then the LEDs (green) of the upper side display section 111 of the first display apparatus 110 and the inner side display sections 121 of the second display apparatus 120 (which are collectively referred to as error display means) are turned on (step 202).

If the own vehicle is not in a region in which the error is great, then an unlit state of the LEDs (green) of the error display means is confirmed (step 203), and then it is decided whether or not a signal of a different vehicle is received (step 204). If a signal from a different vehicle is not received, then the LEDs (blue) other than those of the error display means described above are turned off (step 205).

It is decided whether the provision stage is the information provision stage (A stage) or the alert stage (B stage) (step 206).

If the provision stage is the information provision stage (A stage), then all of the three-piece lower side display sections of the first display apparatus and the outer side display sections of the second display apparatus (collectively referred to as different vehicle information reception means) are turned on (step 207).

Then, it is decided whether or not the button of the direction designation operation section is operated (ON) (step 208). If the button is operated (ON), then it is decided whether or not a different vehicle exists in the designated direction (step 209). Since the button of the direction designation operation section is configured from a cross button, (a) upward, (b) rightward, (c) leftward and (d) downward directions can be designated. Thus, if the (a) upward direction is designated, then existence of a different vehicle ahead of the own vehicle including left and right forward directions is decided; if the (b) rightward direction is designated, then existence of a different vehicle in the right forward direction and the right rearward direction is decided; if the (c) leftward direction is designated, then existence of a different vehicle in the left forward direction and the left rearward direction is decided; and if the (d) downward direction is designated, then existence of a different vehicle in the rear including left and right rearward directions is decided.

If a different vehicle exists in the designated direction, then only those LEDs of the different vehicle information reception means corresponding to the designated direction (the three-piece lower side display sections 111 of the first display apparatus 110 and the outer side display sections 122 of the second display apparatus 120) are turned on (step 210).

In the case where no vehicle exists in the designated direction or in the case where there is no button operation of the direction designation operation section 130, full lighting of the different vehicle information reception means is maintained.

After only an LED of the different vehicle information reception means corresponding to the designated direction is lit, an operation (OFF) of a button of the direction designation operation section 130 is decided (step 211), and when OFF is confirmed, the processing is ended. In other words, while the button is kept operated, the LED is kept lit.

In the case of the alert stage (B stage), only the LED in the direction in which the different vehicle exits (front forward, left forward, right forward, left rearward or right rearward direction) from among the LEDs (blue) of the three-piece lower side display sections 111 of the first display apparatus 110 and the outer side display sections 122 of the second display apparatus 120 (different vehicle information reception means) is lit (step 212).

In a flow of the alert stage (B stage), even if a button operation of the direction designation operation section 130 is carried out, the button operation is invalidated. Accordingly, at the alert stage (B stage), information having high urgency can be kept preferentially let known to the driver, and changeover of the display information can be prevented. Further, in the alerted state, there is no necessity for the driver himself or herself to acquire different vehicle information.

Although, in the example described above, if no different vehicle exists in the designated direction at step 209, full lighting of the different vehicle information reception means is maintained, a manner of LED lighting may be changed.

It is to be noted that, where driving support of the "warning" described in the paragraph number 0039 is carried out, a speaker or the like for sound outputting incorporated in the own vehicle is used to emit an announcement for the instruction of a behavior.

FIG. 18 shows another particular example of the outputting apparatus 6 incorporated in a motorcycle, and elements having a similar configuration to that in FIG. 14 are denoted by like reference characters.

In the case of the present example, an indicator of a point light emitting type is used for the first display apparatus 110 provided on the inner side of the front cowl 100 of the motorcycle and the second display apparatus 120 provided at the mirror base portions 104 of the back mirror apparatus 103 provided on the left and right of the handle bar 102 for reflecting the rear of the vehicle.

In particular, the first display apparatus 110 is configured from central display sections 151C and 152C configured from a pair of light sources provided above the meter instrument 101 at a substantially central position between the left and right back mirror apparatus 103, and right side display sections 151R and 152R and left side display sections 151L and 152L individually configured from a pair of point light sources (LEDs) at the left and right positions with respect to the central display sections 151C and 152C. The first display apparatus 110 displays driving support information when a different vehicle exists at a position ahead of the own vehicle similarly to the first display apparatus 110 of FIG. 14. The central display section 151C, right side display section 151R and left side display section 151L are configured from a green LED, and the central display section 152C, right side display section 152R and left side display section 152L are configured from a blue LED.

Each of the second display apparatus 120 is provided as a pair of point light sources (LEDs) 161 Land 162L (161 Rand 162R) at the mirror base portion 104 of each of the left and right back mirror apparatus 103 such that it is positioned rearwardly with respect to the first display apparatus 110, and displays driving support information when a different vehicle exists at a position behind the own vehicle. The inner side point light source 161L (161R) is configured from a green LED while the outer side point light source 162L (162R) is configured from a blue LED.

Further, a point light source which configures the first display apparatus 110 and a point light source which configures the second display apparatus 120 are disposed such that they are positioned on a substantially straight line (on a broken line) in the horizontal direction as viewed from the front by the driver riding on the vehicle.

It is to be noted that it is particularly preferable that the display sections 151L, 151C and 151R provided on the meter instrument 101 are disposed on the meter instrument 101 such that they are aligned on a substantially straight line in the vehicle widthwise direction and also the display sections 152L, 152C and 152R are disposed on the meter instrument 101 such that they are aligned on a substantially straight line while the two straight lines extend substantially in parallel to each other.

The lighting process of the first display apparatus 110 and the second display apparatus 120 is same as that of the example of FIGS. 14 to 16, and the green LEDs 151 which configure the point light sources of the first display apparatus 110 and the inner side point light sources (green LEDs) 161 which configure the point light sources of the second display apparatus are lit when the own vehicle is positioned in an area in which the error is great. Further, all of the blue LEDs 152 which configure the point light sources of the first display apparatus 110 are turned on to notify the driver of the information provision (A) stage at which "a different vehicle exists in the communication area." On the other hand, when one of the blue LEDs which configure the point light sources of the first display apparatus 110 and the second display apparatus 120, this notifies the driver of the alert (B) stage at which "a different vehicle having a near positional relationship to the own vehicle exists" in the direction indicated by the lighting.

With the configuration of the example described above, the first display apparatus 110 can be disposed at the shortest distance between the second display apparatus 120 of the left and right mirrors, and the driver can confirm all of the display means through a small amount of movement of the line of sight.

Further, since the display apparatus displays not an area (image display) but as a lighting position, information around the own vehicle can be recognized only from the lighting state. Therefore, action after the confirmation of the information till the grasp of the actual situation can be carried out rapidly by a series of operations without watching the image display.

Further, the second display apparatus 120 may include, as shown in FIG. 19, a point light emitting portion 125 which can carry out point light emission and a plane light emitting portion 126 which can carry out plane light emission such that the point light emitting portion 125 is lit at the information provision (A) stage ((a) of FIG. 19) but the point light emitting portion 125 and the plane light emitting portion 126 are lit at the alert (B) stage ((b) of FIG. 19).

According to this configuration, since a difference in magnitude of the light emitting area is provided between the information provision (A) stage and the alert (B) stage, the driver can recognize a change in lighting quickly and can cope with a change in urgency quickly.

While the second display apparatus 120 of the outputting apparatus 6 described above is provided at the mirror base portion 104 of each of the back mirror apparatus 103, the second display apparatus may be formed integrally with the mirror face portion of each of the back mirrors.

For example, as shown in FIG. 20, in a back mirror apparatus fixed to the handle bar side through a mirror stay portion 301, a plane light emitting LED 305 formed on an LED board 304 is disposed on the mirror stay side in a housing 303 to which a mirror face portion 302 is fixed. The housing 303 is movable relative to the mirror stay portion 301 to adjust the range of the rearward vision. Further, a hood 306 which has a convex shape with respect to the mirror face portion 302 is provided on the housing 303 so that light from the plane light emitting LED 305 may not be introduced to the mirror face portion 302. This is because it is intended to prevent occurrence of reflected light caused by incidence of light to the mirror face portion 302. To the plane light emitting LED 305, a power supply voltage is supplied from a harness 307.

Further, the wall face of the hood 306 on the plane light emitting LED 305 side may be formed as a reflecting face so that light of the LED may be reflected toward the driver.

Further, as shown in FIG. 21, a plurality of point light sources 308 may be disposed on the LED board 304 and formed on the second display apparatus 120 in place of the plane light emitting LED 305. In this example, two blue light sources 308B are disposed for one green light source 308G.

Furthermore, as shown in FIG. 22, the hood 306 of an L shape may be formed as a separate member from the housing 303 while the LED board 304 is disposed on a bottom face which continues in a bent state to the hood 306.

Further, the second display apparatus 120 may be configured so as to be capable of being fixed to the mirror stay portion 301 of a general-purpose back mirror. For example, as shown in FIG. 23, the second display apparatus 120 is configured such that an LED board 402 on which point light emitting LEDs 403 are mounted is formed at an upper side position of a base member 400 having a grooved portion 401 which can be fitted with the mirror stay portion 301 and is covered with a lens 404. By using a member which can be deformed when force is applied thereto as the base member 400, the mirror stay portion 301 can be pushed into and fixed to the grooved portion 401.

A hood portion 405 is formed on one end side of the base member 400 such that light from the point light emitting LEDs 403 may not be introduced to the mirror face of the back mirror apparatus 103, and light of the second display apparatus 120 can be prevented from being reflected to the mirror face portion. Accordingly, also where the second display apparatus 120 and the mirror face portion are disposed in the proximity of each other, since rearward confirmation can be carried out readily while preventing reflection to the mirror face portion, actual confirmation of a situation of the rear on the mirror can be carried out through a small amount of movement of the line of sight after information displayed on the second display apparatus 120 is recognized.

FIG. 24 shows another example of the second display apparatus 120 which can be mounted on a general-purpose back mirror. Those elements having the same configuration as that of FIG. 23 are denoted by like reference characters. In the present example, a lighting section 503 such as a position lamp or a blinker is provided on the opposite side of the second display apparatus 120 to the point light emitting LEDs 403. In particular, the mirror stay portion 301 is sandwiched by the base member 400 on which the point light emitting LEDs 403 are disposed and a base member 500 wherein the lighting section 503 such as a position lamp or a blinker is disposed on an LED board 502, and the point light emitting LEDs 403 and the lighting section 503 such as a blinker are fixed to each other by bolts 505 such that the point light emitting LEDs 403 are positioned on the driver side and the lighting section 503 is positioned on the front side of the vehicle. The lighting section 503 such as a blinker is covered with a lens 504 fixed to the base member 500 similarly to the point light emitting LEDs 403.

The present invention is directed to achieving, in a driving support apparatus for a vehicle for providing driving support information regarding traveling of an own vehicle with respect to other vehicles based on position information of the vehicles by inter-vehicle communication, improvement in visibility and recognizability of driving support information.

In a driving support apparatus for a vehicle in which a driving support system which carries out, when a different vehicle exists in a communication area of the own vehicle, transmission and reception of position information between the own vehicle and the different vehicle and provides driving support information of traveling relating to a risk of the own vehicle with regard to the different vehicle based on the position information is mounted, the driving support apparatus for a vehicle including display means for displaying the driving support information, and display controlling means for controlling a display mode of the display means based on a positional relationship between the own vehicle and the different vehicle, the display means includes first display means for displaying the driving support information when a different vehicle exists at a position ahead of the own vehicle, and second display means provided as a separate body from the first display means on a back mirror apparatus for displaying the driving support information when a different vehicle exists at a position behind the own vehicle.

## Claims

1. A driving support apparatus for a saddle type vehicle having a back mirror apparatus (103) which reflects a situation behind the vehicle, wherein a driving support system is adapted to carry out, when a different vehicle exists in a communication area of the own vehicle, transmission and reception of at least position information between the own vehicle and the different vehicle and provides driving support information of traveling relating to a risk of the own vehicle with regard to the different vehicle based on the position information is mounted, said driving support apparatus comprising:
display means (110, 120) adapted to display the driving support information; and
display controlling means adapted to control a display mode of said display means based on a positional relationship between the own vehicle and the different vehicle;
said display means includes:
first display means (110) adapted to display the driving support information when a different vehicle exists at a position ahead of the own vehicle; and
second display means (120) adapted to display the driving support information when a different vehicle exists at a position behind the own vehicle;
**characterized in that**
said second display means (120) is formed as a separate body from said first display means (110) and is provided on a mirror base portion (104) of the back mirror apparatus (103).

2. The driving support apparatus according to claim 1, wherein said first display means (110) is provided in a displaced relationship to the front of the vehicle or to the rear of the vehicle with respect to said second display means (120).

3. The driving support apparatus according to claim 1 or 2, wherein the vehicle is a saddle type vehicle which includes:
a front cowl (100) which covers a front portion of the vehicle;
a meter instrument (101) attached to the front cowl (100); and
a handle bar (102) pivotably mounted with respect to the front cowl (100) for steering a front wheel;
a left mirror (103) and a right mirror (103) being provided on the left and right of the handle bar (102) while said second display means (120) is provided on each of the left mirror and the right mirror;
said first display means (110) being provided on the front cowl (100) or the meter instrument (101) between the left mirror and the right mirror.

4. The driving support apparatus according to claim 3, wherein said first display means (110) is disposed on a straight line which interconnects the second display means (120) provided on the left mirror and the right mirror as viewed in front elevation from a driver riding the vehicle.

5. The driving support apparatus according to any of claims 1 to 4, wherein each of said first display means (110) and said second display means (120) is a lighting member which can carry out lighting display.

6. The driving support apparatus according to any one of claims 1 to 5, further comprising:
a driving support level decision section (14) which raises a degree of provision of driving support information relating to the risk stepwise as the own vehicle and the different vehicle come nearer to each other in the positional relationship therebetween;
the degree of provision of driving support information decided by said driving support level decision section (14) including at least
(A) a stage at which it is guided that a different vehicle exists in the communication area, and
(B) another stage at which a direction in which a different vehicle having a near positional relationship to the own vehicle exists is guided;
said first display means (110) and said second display means (120) carrying out fully lighting at the (A) stage;
one of the display means which corresponds to a direction in which an object different vehicle exists being lit at the (B) stage.

7. The driving support apparatus according to claim 6, further comprising:
direction designation operation means (130) for designating a direction;
said display controlling means turning on, at the (A) stage, when said direction designation operation means (130) is operated and a different vehicle exists in the designated direction, that one of the display means which corresponds to the designated direction.

8. The driving support apparatus according to claim 6 or 7, wherein, when said direction designation operation means (130) is operated at the (B) stage, the operation is invalidated.

9. The driving support apparatus according to any one of claims 6 to 8, wherein
said second display means (120) includes a point light emitting section (125) which can carry out point light emission, and a plane light emitting section (126) which can carry out plane light emission, and
at the (A) stage, the point light emitting section (125) is turned on, but at the (B) stage, said point light emitting section and said plane light emitting section (126) are turned on.

10. The driving support apparatus according to any one of claims 1 to 9, **characterized in that** a convex-shaped hood portion (306) is provided between said second display means (120) and a mirror face portion (302) of the back mirror apparatus (103).

## Patentansprüche

1. Fahrassistenzvorrichtung für ein Fahrzeug in Sattelbauart, das eine Rückspiegelvorrichtung (103) aufweist, die eine Situation hinter dem Fahrzeug reflektiert, wobei ein Fahrassistenzsystem angebracht und dazu ausgelegt ist, dann, wenn in einem Kommunikationsbereich des eigenen Fahrzeugs ein anderes Fahrzeug existiert, Senden und Empfangen von zumindest Positionsinformation zwischen dem eigenen Fahrzeug und dem anderen Fahrzeug auszuführen, und Fahrassistenzinformation der Fahrt in Bezug auf ein Risiko des eigenen Fahrzeugs in Bezug auf das andere Fahrzeug basierend auf der Positionsinformation liefert, wobei die Fahrassistenzvorrichtung aufweist:
ein Anzeigemittel (110, 120), das dazu ausgelegt ist, die Fahrassistenzinformation anzuzeigen; und
ein Anzeigesteuerungsmittel, das dazu ausgelegt ist, einen Anzeigemodus des Anzeigemittels basierend auf einer Positionsbeziehung zwischen dem eigenen Fahrzeug und dem anderen Fahrzeug zu steuern;
wobei das Anzeigemittel enthält:
ein erstes Anzeigemittel (110), das dazu ausgelegt ist, die Fahrassistenzinformation anzuzeigen, wenn ein anderes Fahrzeug an einer Position vor dem eigenen Fahrzeug existiert; und
ein zweites Anzeigemittel (120), das dazu ausgelegt ist, die Fahrassistenzinformation anzuzeigen, wenn ein anders Fahrzeug an einer Position hinter dem eigenen Fahrzeug existiert;
**dadurch gekennzeichnet, dass** das zweite Anzeigemittel (120) als vom ersten Anzeigemittel (110) separater Körper ausgebildet und an einem Spiegelbasisabschnitt (104) der Rückspiegelvorrichtung (103) vorgesehen ist.

2. Die Fahrassistenzvorrichtung nach Anspruch 1, wobei das erste Anzeigemittel (110) in einer zur Front des Fahrzeugs oder zum Heck des Fahrzeugs, in Bezug auf das zweite Anzeigemittel (120), verlagerten Beziehung vorgesehen ist.

3. Die Fahrassistenzvorrichtung nach Anspruch 1 oder 2, wobei das Fahrzeug ein Fahrzeug in Sattelbauart ist, welches enthält:
eine Frontabdeckung (110), die einen vorderen Abschnitt des Fahrzeugs abdeckt;
ein Messinstrument (101), das an der Frontverkleidung (100) angebracht ist; und
eine Lenkstange (102), die in Bezug auf die Frontabdeckung (100) schwenkbar angebracht ist, um ein Vorderrad zu lenken;
wobei ein linker Spiegel (103) und ein rechter Spiegel (103) links und rechts der Lenkstange (102) vorgesehen sind, während das zweite Anzeigemittel (120) jedem vom linken Spiegel und rechten Spiegel vorgesehen ist;
wobei das erste Anzeigemittel (110) an der Frontabdeckung (100) oder dem Messinstrument (101) zwischen dem linken Spiegel und dem rechten Spiegel vorgesehen ist.

4. Die Fahrassistenzvorrichtung nach Anspruch 3, wobei das erste Anzeigemittel (110) auf einer geraden Linie angeordnet ist, die die am linken Spiegel und rechten Spiegel vorgesehenen zweiten Anzeigemittel (120) verbindet, bei Betrachtung in Frontansicht von einem das Fahrzeug fahrenden Fahrer.

5. Die Fahrassistenzvorrichtung nach einem der Ansprüche 1 bis 4, wobei jedes vom ersten Anzeigemittel (110) und zweiten Anzeigemittel (120) ein Leuchtelement ist, das eine Leuchtanzeige ausführen kann.

6. Die Fahrassistenzvorrichtung nach einem der Ansprüche 1 bis 5, die ferner aufweist:
einen Fahrassistenzgradentscheidungsabschnitt (14), der einen Grad der Bereitstellung von Fahrassistenzinformationen in Bezug auf das Risiko stufenweise anhebt, wenn sich das eigene Fahrzeug und das andere Fahrzeug in ihrer Positionsbeziehung dazwischen einander näherkommen;
wobei der Grad der Bereitstellung von Fahrassistenzinformation, der von dem Fahrassistenzgradentscheidungsabschnitt (14) entschieden ist, zumindest enthält:
(A) eine Stufe, an der angeleitet wird, dass ein anderes Fahrzeug in dem Kommunikationsbereich existiert, und
(B) eine andere Stufe, in der eine Richtung, in der ein anderes Fahrzeug mit einer nahen Positionsbeziehung zum eigenen Fahrzeug existiert, angeleitet wird,
wobei das erste Anzeigemittel (110) und das zweite Anzeigemittel (120) in der Stufe (A) ein vollständiges Aufleuchten ausführen;
wobei eines der Anzeigemittel, das einer Richtung entspricht, in der ein anderes Zielfahrzeug existiert, in der Stufe (B) aufleuchtet.

7. Die Fahrassistenzvorrichtung nach Anspruch 6, die ferner aufweist:
ein Richtungsanzeigebetätigungsmittel (130) zum Anzeigen einer Richtung,
wobei das Anzeigesteuerungsmittel in der Stufe (A), wenn das Richtungsanzeigebetätigungsmittel (130) betätigt wird und ein anderes Fahrzeug in der angezeigten Richtung existiert, das eine der Anzeigemittel einschaltet, das der angezeigten Richtung entspricht.

8. Die Fahrassistenzvorrichtung nach Anspruch 6 oder 7, wobei, wenn das Richtungsanzeigebetätigungsmittel (130) in der Stufe (B) betätigt wird, die Betätigung ungültig gemacht wird.

9. Die Fahrassistenzvorrichtung nach einem der Ansprüche 6 bis 8, wobei
das zweite Anzeigemittel (120) einen Punktlichtabgabeabschnitt (125) enthält, der eine Punktlichtabgabe ausführen kann, sowie einen Flachlichtabgabeabschnitt (126), der eine flache Lichtabgabe ausführen kann, und
in der Stufe (A) der Punktlichtabgabeabschnitt (125) eingeschaltet wird, aber in der Stufe (B) der Punktlichtabgabeabschnitt und der Flachlichtabgabeabschnitt (126) eingeschaltet werden.

10. Die Fahrassistenzvorrichtung nach einem der Ansprüche 1 bis 9, **dadurch gekennzeichnet, dass** ein konvex geformter Haubenabschnitt (306) zwischen dem zweiten Anzeigemittel (120) und einem Spiegelflächenabschnitt (302) der Rückspiegelvorrichtung (103) vorgesehen ist.

## Revendications

1. Appareil d'aide à la conduite pour un véhicule de type à selle ayant un appareil de rétroviseur (103) qui réfléchit une situation derrière le véhicule, dans lequel un système d'aide à la conduite est adapté pour effectuer, lorsqu'un véhicule différent existe dans une zone de communication du propre véhicule, une transmission et une réception au moins d'informations de position entre le propre véhicule et le véhicule différent et fournit des informations d'aide à la conduite pour le déplacement en ce qui concerne un risque du propre véhicule par rapport au véhicule différent sur la base des informations de position, ledit appareil d'aide à la conduite comprenant :
un moyen d'affichage (110, 120) adapté pour afficher les informations d'aide à la conduite ; et
un moyen de commande d'affichage adapté pour commander un mode d'affichage dudit moyen d'affichage sur la base d'une relation de position entre le propre véhicule et le véhicule différent ;
ledit moyen d'affichage comprend:
un premier moyen d'affichage (110) adapté pour afficher les informations d'aide à la conduite lorsqu'un véhicule différent existe au niveau d'une position devant le propre véhicule ; et
un deuxième moyen d'affichage (120) adapté pour afficher les informations d'aide à la conduite lorsqu'un véhicule différent existe au niveau d'une position derrière le propre véhicule;
**caractérisé en ce que**
ledit deuxième moyen d'affichage (120) est formé en tant que corps séparé dudit premier moyen d'affichage (110) et est prévu sur une partie de base de rétroviseur (104) de l'appareil de rétroviseur (103).

2. Appareil d'aide à la conduite selon la revendication 1, dans lequel ledit premier moyen d'affichage (110) est prévu dans une relation déplacée vers l'avant du véhicule ou vers l'arrière du véhicule par rapport audit deuxième moyen d'affichage (120).

3. Appareil d'aide à la conduite selon la revendication 1 ou 2, dans lequel le véhicule est un véhicule de type à selle qui comprend:
un capot avant (100) qui couvre une partie avant du véhicule ;
un compteur (101) fixé au capot avant (100) ; et
un guidon (102) monté pivotant par rapport au capot avant (100) afin de diriger une roue avant;
un rétroviseur gauche (103) et un rétroviseur droit (103) étant prévus à gauche et à droite du guidon (102) tandis que ledit deuxième moyen d'affichage (120) est prévu sur chacun du rétroviseur gauche et du rétroviseur droit ;
ledit premier moyen d'affichage (110) étant prévu sur le capot avant (100) ou le compteur (101) entre le rétroviseur gauche et le rétroviseur droit.

4. Appareil d'aide à la conduite selon la revendication 3, dans lequel ledit premier moyen d'affichage (110) est disposé sur une ligne droite qui relie les deuxièmes moyens d'affichage (120) prévus sur le rétroviseur gauche et le rétroviseur droit dans une vue en élévation de face depuis un conducteur conduisant le véhicule.

5. Appareil d'aide à la conduite selon l'une quelconque des revendications 1 à 4, dans lequel chacun dudit premier moyen d'affichage (110) et dudit deuxième moyen d'affichage (120) est un élément lumineux qui peut réaliser un affichage lumineux.

6. Appareil d'aide à la conduite selon l'une quelconque des revendications 1 à 5, comprenant en outre:
une partie de décision de niveau d'aide à la conduite (14) qui augmente un degré de fourniture d'informations d'aide à la conduite concernant le risque de manière progressive tandis que le propre véhicule et le véhicule différent se rapprochent l'un de l'autre dans la relation de position entre eux ;
le degré de fourniture d'informations d'aide à la conduite décidé par ladite partie de décision de niveau d'aide à la conduite (14) comprenant au moins
(A) une étape à laquelle il est indiqué qu'un véhicule différent existe dans la zone de communication, et
(B) une autre étape à laquelle une direction dans laquelle existe un véhicule différent ayant une relation de position proche du propre véhicule est indiquée;
ledit premier moyen d'affichage (110) et ledit deuxième moyen d'affichage (120) réalisant à un éclairage complet à l'étape (A) ;
un des moyens d'affichage qui correspond à une direction dans laquelle existe un véhicule différent étant éclairé à l'étape (B).

7. Appareil d'aide à la conduite selon la revendication 6, comprenant en outre:
un moyen de fonctionnement de désignation de direction (130) afin de désigner une direction ;
ledit moyen de commande d'affichage allumant, à l'étape (A), lorsque ledit moyen de fonctionnement de désignation de direction (130) fonctionne et qu'un véhicule différent existe dans la direction désignée, celui des moyens d'affichage qui correspond à la direction désignée.

8. Appareil d'aide à la conduite selon la revendication 6 ou 7, dans lequel, lorsque ledit moyen de fonctionnement de désignation de direction (130) fonctionne à l'étape (B), le fonctionnement est invalidé.

9. Appareil d'aide à la conduite selon l'une quelconque des revendications 6 à 8, dans lequel
ledit deuxième moyen d'affichage (120) comprend une partie d'émission de point lumineux (125) qui peut réaliser une émission de point lumineux, et une partie d'émission de lumière plane (126) qui peut réaliser une émission de lumière plane, et
à l'étape (A), la partie d'émission de point lumineux (125) est allumée, mais à l'étape (B), ladite partie d'émission de point lumineux et ladite partie d'émission de lumière plane (126) sont allumées.

10. Appareil d'aide à la conduite selon l'une quelconque des revendications 1 à 9, **caractérisé en ce qu'**une partie de capuchon de forme convexe (306) est prévue entre ledit deuxième moyen d'affichage (120) et une partie de face de rétroviseur (302) de l'appareil de rétroviseur (103).
